# EUROPEAN PATENT APPLICATION

(11) **EP 3 540 846 A1**
(43) Date of publication of application: **18.09.2019**
(21) Application number: 18162221.8
(22) Date of filing: 16.03.2018
(51) Int. Cl.: H01M 10/6553, H01M 10/647, H01M 10/6556, H01M 10/6555, H01M 10/613, H01M 2/20

(54) **BATTERY CELL ARRANGEMENT**

(71) Applicant: ABB Schweiz AG, 5400 Baden (CH)
(72) Inventor: Schuler, Gabriel, 6415 Arth (CH); Flueckiger, Reto, 8055 Zürich (CH); Sologubenko, Oleksandr, 8906 Bonstetten (CH); Wicki, Stefan, 5702 Niederlenz (CH); Kaufmann, Herbert, 5200 Brugg (CH); Guggisberg, Beat, 5417 Untersiggenthal (CH)
(74) Representative: Qip Patentanwälte Dr. Kuehn & Partner mbB

(57) **Abstract**

A battery cell arrangement (24) comprises a plurality of battery cells (10, 10'), each battery cell having two terminals (16); a plurality of interconnection elements (32), each interconnection element (32) electrically interconnecting a terminal (16) of a battery cell (10, 10') with a terminal (16) of a further battery cell (10, 10'); a plurality of heat spreader plates (26), each heat spreader plate (26) arranged between two adjacent battery cells (10, 10'); wherein at least one heat spreader plate (26) between two adjacent battery cells (10, 10') is in contact with an interconnection element (32) interconnecting terminals (16) of the two adjacent battery cells (10, 10'), such that the heat spreader plate (26) is in thermal contact with the terminals (16) interconnected by the interconnection element (32).

## Description

### FIELD OF THE INVENTION

The invention relates to the field of cooling of battery cells. In particular, the invention relates to a battery cell arrangement.

### BACKGROUND OF THE INVENTION

When battery cells are charged and discharged heat is generated, which may have to be removed. For example, this is the case for battery cells in electric vehicles, where the charging and discharging may take place rather fast. To extend the lifetime and to improve the performance of battery cells, it may be beneficial to provide cooling means that go beyond a pure air cooling of an outside of the battery cells.

US 6 512 347 B1 shows a battery cell arrangement with cooling plates between adjacent battery cells that are liquid cooled on a top edge.

US 2011 212 355 A1 shows a frame for pouch cells, which cooling plates between adjacent cells that are liquid cooled from the side.

### DESCRIPTION OF THE INVENTION

It is an objective of the invention to improve the cooling of battery cells.

This objective is achieved by the subject-matter of the independent claims. Further exemplary embodiments are evident from the dependent claims and the following description.

The invention relates to a battery cell arrangement. A battery cell arrangement may comprise a plurality of battery cells, which may be connected in series and/or in parallel. The battery cell arrangement may furthermore comprise a housing and/or support member, which mechanically interconnects the battery cells, which, for example, may be arranged one after the other in a stack.

The battery cell arrangement may be used as electric energy storage device for any kind of electric propelled vehicle, such as an electric vehicle, or for stationary electric energy storage. However, it is also possible that the battery cell arrangement is used in other applications.

According to an embodiment of the invention, the battery cell arrangement comprises a plurality of battery cells, each battery cell having two terminals. The battery cells may be pouch cells or prismatic cells. In general, a battery cell may be an electrochemical cell with two electrodes and an electrolyte. The battery cell furthermore may comprise a container, in which these components are accommodated, such as a pouch or a housing. The terminals may be electrically connected to the electrodes and/or may protrude from the container. The battery cells may be stacked with each other. The battery cells may be arranged in such a way that the terminals all protrude from one or multiple sides of the battery cell arrangement.

According to an embodiment of the invention, the battery cell arrangement furthermore comprises a plurality of interconnection elements, each interconnection element electrically interconnecting a terminal of a battery cell with a terminal of a further, such as an adjacent battery cell. The cell interconnecting element may be directly represented by the cell tabs of the interconnected cells. With the electrically conducting interconnection elements, the battery cells may be connected in parallel and/or in series. The interconnection elements may be electrically conducting foil strips and/or electrically conducting plates, such as metal sheets.

According to an embodiment of the invention, the battery cell arrangement furthermore comprises a plurality of heat spreader plates, each heat spreader plate arranged between two adjacent battery cells. The heat spreader plates may be made of plastics with a high thermal conduction coefficient and/or may be made of metal, such as metal sheets. Each heat spreader plate (or the body of the heat spreader plate) may have substantially the same shape as a side of the battery cell it is in contact with.

The heat spreader plate between two adjacent battery cells may be in two-dimensional contact with the facing sides of the adjacent battery cells.

The heat spreader plates may be cooled from a side of the battery cell arrangement, where they are in contact with a cooling channel, which may be filled with cooling liquid, or an air cooling duct. With the cooling channel, the heat spreader plates may be liquid cooled and/or heat generated in the battery cells may be transported away with the cooling liquid.

According to an embodiment of the invention, at least one heat spreader plate between two adjacent battery cells is in contact with an interconnection element interconnecting terminals of the two adjacent battery cells, such that the heat spreader plate is in thermal contact with the terminals interconnected by the interconnection element. The heat spreader plate may be in mechanical, thermal and/or electrical contact with the interconnection element.

In other words, the terminals of the battery cells and the heat spreader plate are in thermal contact via the interconnection element. In such a way, heat from the inside of the battery cell may be transported away via the terminals and via the outer surface of the battery cell in thermal contact with the heat spreader plate. Thermal contact may mean that the heat spreader plate and the interconnection element are in mechanical contact and/or are mechanically interconnected, such that heat from the one component may flow to the other one via a contact area. The heat spreader plate may be on cell potential or may be electrically insulated from the cell tabs and/or interconnecting element, while a high thermal conduction from the cell tabs to the heat spreader plate may be maintained.

The terminals or tabs of a battery cell may have a good thermal conductivity to the inside of the battery cell. This thermal conductivity may be better than a thermal resistance from the center of a battery cell to an outer planar surface via its housing. With the thermal contact of the interconnection element and the heat spreader plate, the battery cell may be cooled via its outer planar surface and the terminals.

According to an embodiment of the invention, at least some of the interconnection elements are formed of a terminal of the battery cell and a terminal of an adjacent battery cell, which are bent towards each other. For example, the terminals may be foil strips or metal strips, which may be bent towards each other and/or interconnected with each other, for example, via welding. The terminals may overlap each other and/or may generate an electrical and thermal contact with each other.

According to an embodiment of the invention, the at least one heat spreader plate has an interface element protruding from a body of the heat spreader plate. The body of the heat spreader plate may be the part of the heat spreader plate arranged between the battery cells. For example, the heat spreader plate and the interface element may be made of one sheet. The interface element may be provided at a position, where the interconnection element is guided between the adjacent battery cells. In such a way, the interface element may be provided between the interconnection element and an outer side of the battery cell arrangement.

According to an embodiment of the invention, the interface element is formed of a bent part of the heat spreader plate, for example at a tab side of the battery cell arrangement and/or at multiple areas around the batter cell arrangement. As already mentioned, the heat spreader plate and the interface element may be made from one sheet. The part protruding from a body of the heat spreader plate may be bent to have an area in direct contact with the interconnection element. This part may be mechanically connected to the interconnection element, for example via welding, clamping or pressing.

According to an embodiment of the invention, the interface element, which may be T-shaped, comprises a part attached to an edge of the heat spreader plate. It also may be that a part of the heat spreader plate protruding from a body of the heat spreader plate is attached (such as welded) to a substantially orthogonally arranged plate, which provides an area for contacting the interface element. This plate may be mechanically connected to the interconnection element, for example via welding.

According to an embodiment of the invention, the interconnection element is attached to an edge of the heat spreader plate. It also may be possible that a part of the heat spreader plate, which protrudes from a body of the heat spreader plate, is directly attached to the interconnection element, for example by welding.

According to an embodiment of the invention, the battery cell arrangement furthermore comprises an electrically isolating element between the heat spreader plate and at least one of the adjacent battery cells. The electrically isolating element may be a foil or plate and/or may be thermally conducting. The electrically isolating element may have substantially the same shape as the body of the heat spreader plate. It may be that two electrically isolating elements are arranged on adjacent sides of the heat spreader plate.

The electrically isolating element may be used for electrically separating the container of at least one battery cell from the heat spreader element. This may be beneficial, when the container is electrically conducting and/or is in electrical contact with one of the electrodes and/or terminals of the battery cell.

According to an embodiment of the invention, the battery cell arrangement furthermore comprises a cooling channel in thermal contact with at least one interconnection element for cooling the heat spreader plate and the terminals in thermal contact with the interconnection element. The cooling channel may be adapted for conducting a cooling liquid, which may be adapted for transporting away heat from the interconnection element.

For example, some of the interconnection elements may be arranged in a row on one side of the battery cell arrangement. The cooling channel may be guided along all of these interconnection elements.

According to an embodiment of the invention, an electrically isolating element is arranged between the interconnection element and the cooling channel. The electrically isolating element may be a foil or plate and/or may be thermally conducting. The electrically isolating element may have substantially the same shape as the interconnection element. The electrically isolating element may be used for electrically separating the cooling channel from the interconnection element, while maintaining a good thermal conductivity.

According to an embodiment of the invention, the heat spreader plate has a flange protruding outside between the adjacent battery cells and which is bent towards a battery cell, for example on one or multiple sides. The heat spreader plate and the flange may be made from one sheet and the flange may be made by bending a part of the heat spreader plate outside of the battery cells. It may be that the heat spreader plate has flanges on different and/or multiple sides of the battery cell arrangement, such as opposite sides.

According to an embodiment of the invention, the battery cell arrangement furthermore comprises a cooling channel in thermal contact with the flange. With such a cooling channel, heat may be transported away from the heat spreader plates, which also may cool the interconnection elements and via the interconnection elements the terminals.

An electrically isolating element may be arranged between the flange and the cooling channel. The electrically isolating element may be a foil or plate and/or may be thermally conducting. The electrically isolating element may be used for electrically separating the cooling channel from the flange and/or the heat spreader element.

According to an embodiment of the invention, the battery cells comprise pouch cells. A pouch cell may comprise two foil based electrodes, which are accommodated in a pouch, which may be seen as a flexible bag. Also the terminals of a pouch cell may be made of foil and/or may be flexible.

Each pouch cell may comprise a support frame, which mechanically supports the battery cell at a circumferential border. The pouch of the pouch cell may be made of two foils, which are welded together at their border. This border may be clamped in the support frame. For example, the support frame may have a rectangular shape.

According to an embodiment of the invention, an electrically isolating material is included into the support frame for electrically isolating the circumferential border. The support frame may include rubber sealing materials to electrically isolate the cut area of the pouch cell, which may be composed of two foils, which may have an electrically conducting layer on a side. This electrically isolating material, such as the rubber like material, may be directly included in a polymeric support frame by adding a second material in the injection moulding sequence.

The heat spreader plate, which may be arranged between two adjacent pouch cells, may be held between the support frames of the adjacent pouch cells, such that the heat spreader plate is in contact with a pouch of the pouch cells. The support frames may have openings, such that the heat spreader plate is in direct contact with the pouch. For example, the support frames may be made of bars arranged at the border of the pouch cell.

It also may be that an electrical insulating element, such as an electrical insulating foil, is placed between the pouch cell and the heat spreader plate.

According to an embodiment of the invention, the support frame comprises two frame elements, which support the pouch cell between them. A pouch cell may be clamped between two frame elements, while the heat spreader plate is clamped between the frame elements of two adjacent pouch cells.

According to an embodiment of the invention, the battery cells comprise prismatic cells. A prismatic cell may have a substantially prismatic housing, which may be stiff. For example, the prismatic housing may be made of metal sheets.

In the case of prismatic cells, the heat spreader plate may be arranged between the housings of the two adjacent prismatic cells. These housings may comprise planar sides, between which the heat spreader plate is clamped.

It has to be noted that the battery cell arrangement may be composed completely of pouch cells, completely of prismatic cells or of a mixture thereof.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a front view of a pouch cell for a battery cell arrangement according to an embodiment of the invention.
Fig. 2 schematically shows a side view of the pouch cell of Fig. 1.
Fig. 3 schematically shows a front view for a frame element for the pouch cell of Fig. 1.
Fig. 4 schematically shows a side view of the pouch cell of Fig. 1 together with a support frame.
Fig. 5 schematically shows a side view of a battery cell arrangement according to an embodiment of the invention.
Fig. 6 schematically shows a side view of a part of battery cell arrangement according to an embodiment of the invention.
Fig. 7 schematically shows a side view of a part of battery cell arrangement according to an embodiment of the invention.
Fig. 8 schematically shows a top view of a battery cell arrangement according to an embodiment of the invention.
Fig. 9 schematically shows a top view of a battery cell arrangement according to an embodiment of the invention.
Fig. 10 schematically shows a side view of the battery cell arrangement of Fig. 9.
Fig. 11 schematically shows a top view of a battery cell arrangement according to an embodiment of the invention.
Fig. 12 schematically shows a side view of the battery cell arrangement of Fig. 11.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

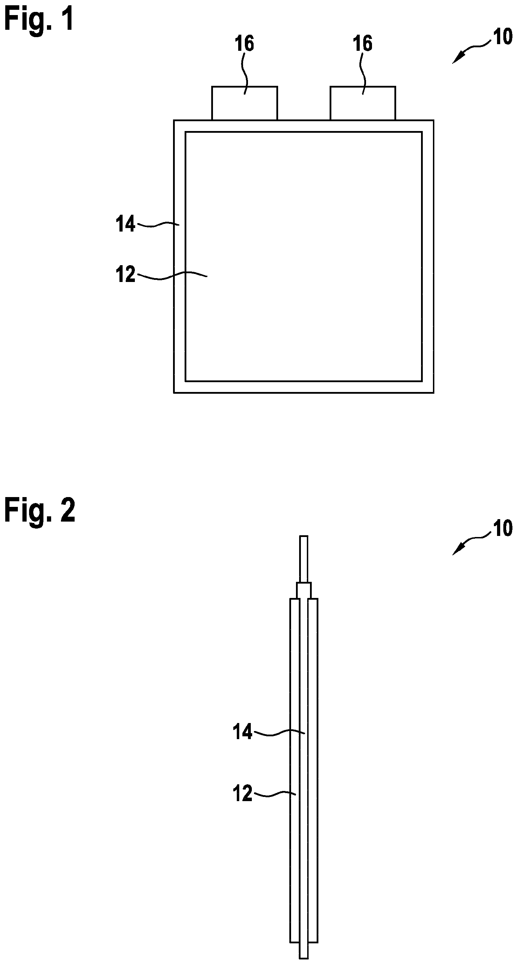

Fig. 1 and 2 schematically show a pouch cell 10 from the front and from the side. The pouch cell 10 has a substantially rectangular pouch 12, which may be made of two foils, which are attached together at a border 14 of the pouch cell 10, for example by welding. The pouch cell 10 has two terminals or taps 16, which protrude from a top side of the pouch cell 10. Each terminal 16, which may be made of an electrically conducting foil or a thin metal strip, is electrically connected to an electrode inside the pouch 12, which also accommodates an electrolyte.

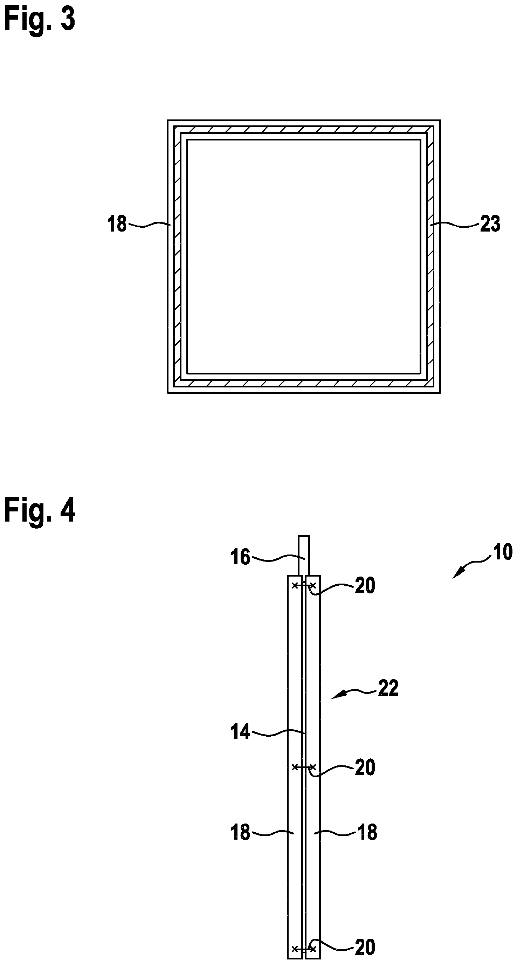

Fig. 3 schematically shows a frame element 18 for mechanically supporting the pouch cell 10. The frame element 18 may have the same shape as the border 14 of the pouch cell 10 and/or may be made of bars. The frame element 18 may be made of polymer and/or metal. In case of a metal frame element 18 a polymeric layer and/or coating may be used as an electrical insulating layer.

Fig. 4 shows the pouch cell 10 supported by two frame elements 18. The border 14 of the pouch cell 10 is clamped between the frame elements 18, which may be mechanically connected at one or more sides of the pouch cells with one or more fixation elements 20, such as clamps, clips, screws or bolts. Alternatively or additionally to the fixation elements 20, the frame elements 18 may be welded together by polymeric or metal welding techniques depending on the chosen frame material. Thus, a support frame 22 for the pouch cell may be provided with two frame elements 18.

It may be that an electrically isolating material 23 (see Fig. 3) is included into the support frame 22, and in particular into the frame elements 18, for electrically isolating the circumferential border 14 of the pouch cell 10. With the electrically isolating material 23, electrically conducting layers of the foils of the pouch cell 10. Which may be accessible at the border 14, may be isolated.

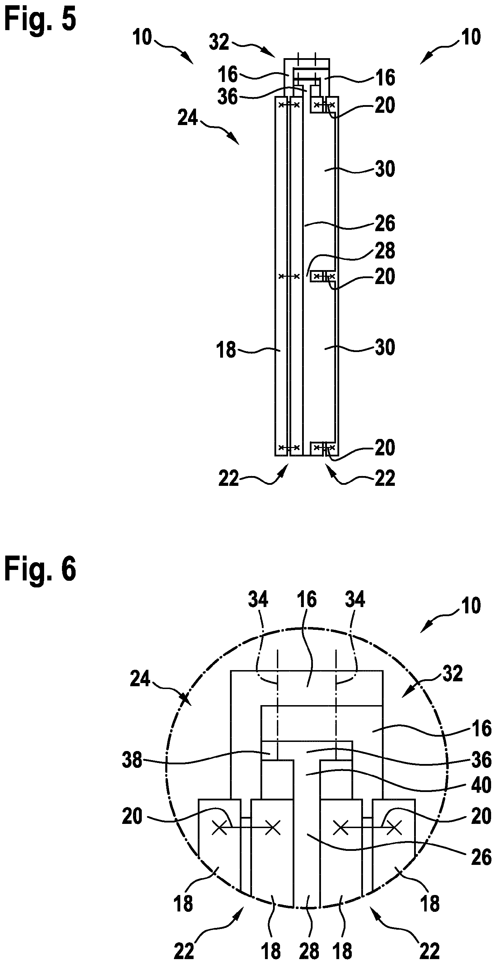

Fig. 5 shows a battery cell arrangement 24, which comprises several pouch cells 10. The pouch cells 10 are stacked via their support frames 22, which may be used for fixating the pouch cells 10 in the battery cell arrangement 24. The support frames 22 may be stacked. The frame elements 18 may have substantially half of an intended thickness of the pouch 12 of the pouch cell and/or a compression of the pouch cell 10 in the pouch cell arrangement 24 may be adjusted with the support frame 22.

Between two adjacent pouch cells 10, a heat spreader plate 26 is arranged, which may be made of sheet metal. The heat spreader plate 26 may have a body 28, which may have substantially the shape of the pouch 12. For example, the body 28 of the heat spreader plate 26 may cover the frame elements 18 of the pouch cells 10. On one or more sides of the pouch cell arrangement 24, the heat spreader plate may have flanges 30, which are bent towards the support frame 22. With the flanges 30, a side cooling of the heat spreader plates may be facilitated (see below).

In Fig. 5, the flanges 30 are formed, such that they do not cover the fixation elements 20.

As shown in more detail in Fig. 6, the terminals 16 of two adjacent pouch cells 10 are electrically interconnected with each other via an interconnection element 32, which is formed of ends of the terminals 16, which are bent towards each other. The terminals 16 may be welded with each other at one or more positions. In Fig. 6, the welds 34 are indicated with lines.

The heat spreader plate 26 has an interface element 36, which is in direct thermal contact with the interconnection element 32. The interface element 36 provides an interface or area which contacts the interconnection element 32. For example, the interface element 36 may have a T-shaped cross-section and/or may be made of a part or metal plate 38 that is attached to an edge 40 of the heat spreader plate 26, which protrudes from the body 28.

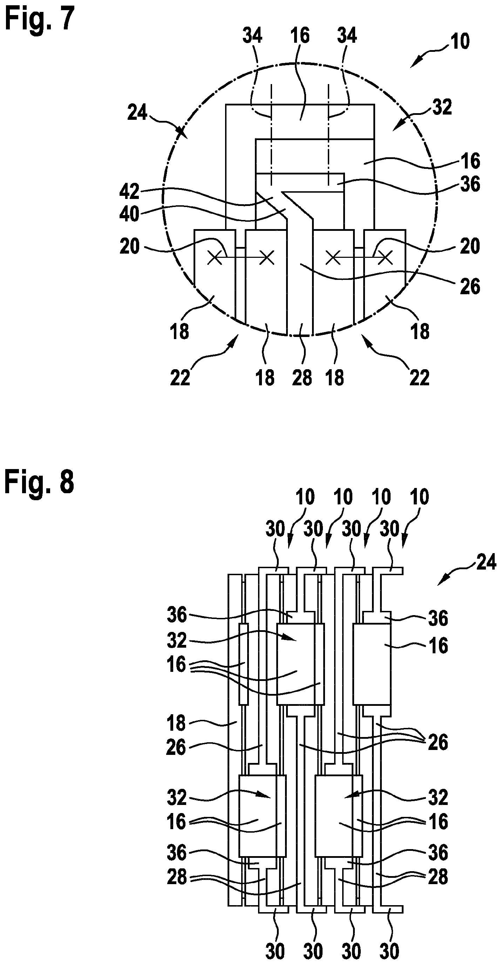

As shown in Fig. 7, the interface element 36 also may be formed of a bent part 42 of the heat spreader plate 26. An edge 40 of the heat spreader plate 26, which protrudes from the body 28, may be bent to contact the interconnection element 32.

As described above and below, a cooling channel may be arranged on the interconnection element 32, which may be directly cooled.

The interface elements 36 provide a heat conducting bridge between the terminals 16 and the heat spreader plate 26. In such a way, area cooling of the front faces of the pouch cells 10 and tab/terminal cooling is possible.

Fig. 8 shows a top view of a battery cell arrangement 24 that may be designed as the ones shown in Fig. 5 to 7. It is shown that the interconnection elements 32 and the interface elements 36 may be arranged in two rows in an alternating way. In such a way, the pouch cells 10 may be connected in series with each other.

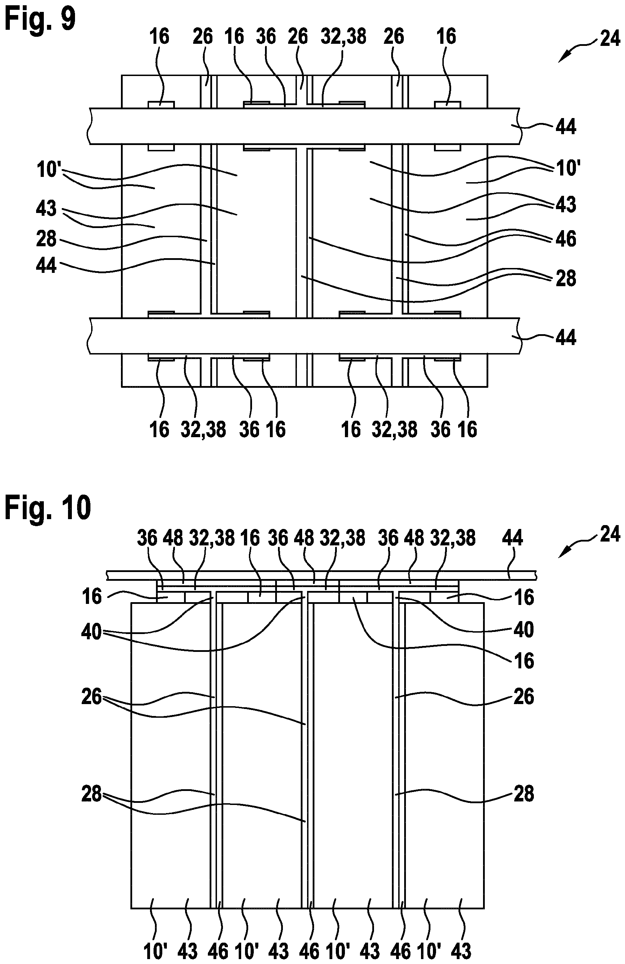

Fig. 9 and 10 show a top view and a side view of a battery cell arrangement 24 composed of prismatic cells 10'. Each prismatic cell 10' has a substantially prismatic housing 43, which may be made of a stiff material such as plastics or sheet metal. Each prismatic cell 10' has two terminals or taps 16, which protrude from a top side of the prismatic cell 10'. The terminals 16 may be electrically connected to electrodes inside the housing 43, which also accommodates an electrolyte.

In Fig. 9 and 10, the prismatic cells 10' are stacked via their housings 43. Analogously to Fig. 5 to 8, between two adjacent prismatic cells 10' a heat spreader plate 26 is arranged. It has to be noted that the heat spreader plates 26 of Fig. 9 and the following may have the same features as the one of Fig. 5 to 8 and vice versa.

The heat spreader plate 26 may have a body 28, which may have substantially the shape of a front side of the prismatic cells 10'. For example, the body 28 of the heat spreader plate 26 may cover the front sides of the prismatic cells 10' .

Two terminals 16 of two adjacent prismatic cells 10' are electrically interconnected with each other via an interconnection element 32, which is provided by the respective heat spreader plate 26 between the adjacent prismatic cells 10'. The interconnection 32 may be a part or metal plate 38 that is attached to an edge 40 of the heat spreader plate 26, which protrudes from the body 28 of the heat spreader plate 26.

The interconnection element 32 may be seen as part of an interface element 36 for thermally connecting the heat spreader plate 26 and the terminals 16. The interface element 36 may have a T-shaped cross-section and/or may provide a heat conducting bridge between the terminals 16 and the heat spreader plate 26.

As shown in Fig. 9, like in Fig. 8, the interconnection elements 32 and the interface elements 36 are arranged in two rows in an alternating way. On each row, a cooling channel 44 may be arranged on the interconnection elements 32. A cooling liquid may be pumped through the cooling channels 44, which directly may cool the interconnection elements 32 and indirectly the terminals 16 and the heat spreader plates 26.

As shown in Fig. 9 and 10, an electrically isolating but thermally conducting element 46 may be arranged between the heat spreader plate 26 and one of the prismatic cells 10'. As shown in Fig. 10, an electrically isolating but thermally conducting element 48 may be arranged between the cooling channel 44 and the interconnection element 32. These isolating elements 46, 48 may be a plastics plate or an electrically isolating foil.

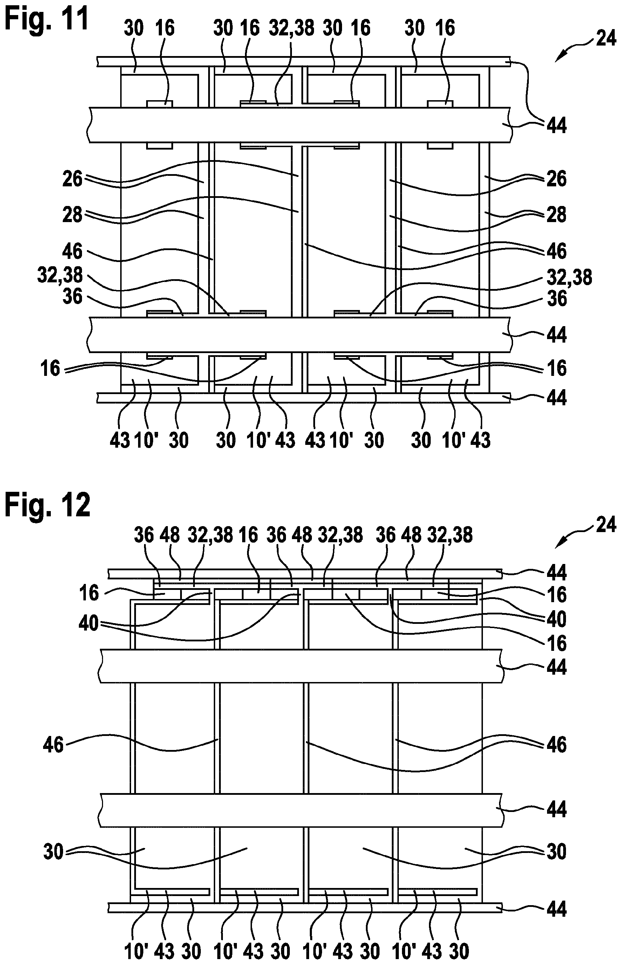

Fig. 11 and 12 show a battery cell arrangement 24 analogous to the one of Fig. 9 and 10. In Fig. 11 and 12, the heat spreader plates 26 have flanges 30 on lateral sides and on the bottom side of the prismatic cells 10'. The flanges 30 are bent towards the housings 43 of the prismatic cells 10'. The flanges 30 may be cooled with cooling channels 44 that are arranged on the flanges 30. With the cooling channels 44, the battery cell arrangement 24 may be indirectly liquid cooled from all sides.

It is possible that isolating elements are provided between the cooling channels 44 and the flanges 30.

Furthermore, the battery cell arrangements 24 shown in Fig. 5 to 8 also may be provided with cooling channels 44 as described with respect to Fig. 9 to 12.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: pouch cell
- 12: pouch
- 14: border
- 16: terminal
- 18: frame element
- 20: fixation element
- 22: support frame
- 23: electrically isolating material
- 24: battery cell arrangement
- 26: heat spreader plate
- 28: body
- 30: flange
- 32: interconnection element
- 34: weld
- 36: interface element
- 38: metal plate
- 40: edge
- 42: bent part
- 10': prismatic cell
- 43: housing
- 44: cooling channel
- 46: electrically isolating element
- 48: electrically isolating element

## Claims

1. A battery cell arrangement (24), comprising:
a plurality of battery cells (10, 10'), each battery cell having two terminals (16);
a plurality of interconnection elements (32), each interconnection element (32) electrically interconnecting a terminal (16) of a battery cell (10, 10') with a terminal (16) of a further battery cell (10, 10');
a plurality of heat spreader plates (26), each heat spreader plate (26) arranged between two adjacent battery cells (10, 10');
wherein at least one heat spreader plate (26) between two adjacent battery cells (10, 10') is in contact with an interconnection element (32) interconnecting terminals (16) of the two adjacent battery cells (10, 10'), such that the heat spreader plate (26) is in thermal contact with the terminals (16) interconnected by the interconnection element (32).

2. The battery cell arrangement (24) of claim 1,
wherein at least some of the interconnection elements (32) are formed of a terminal (16) of the battery cell (10) and a terminal (16) of an adjacent battery cell (10), which are bent towards each other.

3. The battery cell arrangement (24) of claim 1 or 2,
wherein the at least one heat spreader plate (26) has an interface element (36) protruding from a body (28) of the heat spreader plate (26).

4. The battery cell arrangement (24) of claim 3,
wherein the interface element (36) is formed of a bent part (42) of the heat spreader plate (26).

5. The battery cell arrangement (24) of claim 3,
wherein the interface element (36) comprises a part (38) attached to an edge (40) of the heat spreader plate (26).

6. The battery cell arrangement (24) of claim 1 or 2,
wherein the interconnection element (32) is attached to an edge (40) of the heat spreader plate (26).

7. The battery cell arrangement (24) of one of the previous claims, further comprising:
an electrically isolating element (46) between the heat spreader plate (26) and at least one of the adjacent battery cells (10, 10').

8. The battery cell arrangement (24) of one of the previous claims, further comprising:
a cooling channel (44) in thermal contact with at least one interconnection element (32) for cooling the heat spreader plate (26) and the terminals (16) in thermal contact with the interconnection element (32).

9. The battery cell arrangement (24) of claim 8,
wherein an electrically isolating element (48) is arranged between the interconnection element (32) and the cooling channel (44).

10. The battery cell arrangement (24) of one of the previous claims,
wherein the heat spreader plate (26) has a flange (30) protruding outside between the adjacent battery cells (10, 10') and which is bent towards a battery cell (10, 10').

11. The battery cell arrangement (24) of claim 10, further comprising:
a cooling channel (44) in thermal contact with the flange (30).

12. The battery cell arrangement (24) of one of the previous claims,
wherein the battery cells comprise pouch cells (10);
wherein each pouch cell (10) comprises a support frame (22), which mechanically supports the pouch cell (10) at a circumferential border (14).

13. The battery cell arrangement (24) of claim 12,
wherein an electrically isolating material (23) is included into the support frame (22) for electrically isolating the circumferential border (14).

14. The battery cell arrangement (24) of claim 12 or 13,
wherein the heat spreader plate (26), which is arranged between two adjacent pouch cells (10), is held between the support frames (22) of the adjacent pouch cells (10), such that the heat spreader plate (26) is in contact with a pouch (12) of the pouch cells (10) and/or
wherein the support frame (22) comprises two frame elements (18), which support the pouch cell (10) between them.

15. The battery cell arrangement (24) of one of the previous claims,
wherein the battery cells comprise prismatic cells (10');
wherein the heat spreader plate (26) is arranged between housings (43) of the two adjacent prismatic cells (10').
